# EUROPEAN PATENT APPLICATION

(11) **EP 2 524 795 A2**
(43) Date of publication of application: **21.11.2012**
(21) Application number: 11711107.0
(22) Date of filing: 14.01.2011
(51) Int. Cl.: B29C 70/30

(54) **JOINING ARRANGEMENT FOR TWO BOXES OF COMPOSITE MATERIAL WITH AN INTERMEDIATE PART AND METHOD FOR PRODUCING SAID INTERMEDIATE PART**

(30) Priority: 14.01.2010 ES 201030026
(71) Applicant: Airbus Operations, S.L., 28906 Getafe Madrid (ES)
(72) Inventor: DE JULIÁN AGUADO, Antonio, E-28971 Madrid (ES); MARTÍNEZ FERNÁNDEZ, Loreto, E-28043 Madrid (ES); DE LA CRUZ GARCÍA, Oscar, E-28924 Alcorcón Madrid (ES)
(74) Representative: Elzaburu Marquez, Alberto
(86) International application number: PCT/ES2011/070018
(87) International publication number: WO 2011/086220

(57) **Abstract**

Joining arrangement for two boxes (11, 11') of composite material with an intermediate part (31) and method for manufacturing said intermediate part (31). The joint is effected using rivets between the skins (15, 15'; 17, 17') of said boxes (11, 11') and the upper and lower flanges (33, 35) of said T-shaped part (31). The manufacturing method includes the following steps: a) Providing two C-shaped preforms (41, 41'), configured such that their central sections (43, 43') are parallel with one another and their upper and lower flanges (55, 55'; 57, 57') are approximately parallel to the end zones of said skins (15, 15'; 17', 15'); b) Providing two flat preforms (45, 47) to reinforce the flanges (35, 37); c) Forming and curing the part (31) made from said preforms (41, 41', 45, 47) using an RTM method.

## Description

### SCOPE OF THE INVENTION

This invention relates to a joining arrangement for two composite-material boxes with an intermediate part and the manufacturing method for said intermediate part and more specifically to a joining arrangement for the lateral boxes of a horizontal stabiliser of an aircraft with a double T-shaped intermediate part.

### BACKGROUND TO THE INVENTION

Currently and particularly in the aeronautical industry massive use of composite materials with an organic matrix and continuous fibres principally based on epoxy resins and carbon fibres is made in a wide variety of structural elements.

Aeronautical structures require, as is well known, the integration of various structural elements. For example, fuselages require the integration of skins with different structural elements such as beams, frames and stringers. Unlike when metallic materials were used, where the use of mechanical joints was practically the only option for integrating the different structural elements of a component, composite materials can also be integrated using chemical joints.

In certain aeronautical structures, two components must be joined in a way that assure there is an efficient transmission of load between both components. This usually requires the use of intermediate parts. This occurs in particular when joining the lateral boxes of a horizontal stabiliser of an aircraft since the horizontal tail stabiliser must behave like a structural unit. Furthermore, the joint is subjected both to aerodynamic loads and to the loads generated by the mechanism used to trim the horizontal stabiliser.

As it is a problematic joint there have been various proposals both for shear joints and for traction joints and using intermediate parts made of metal, composite or mixed materials.

In one of these proposals, described in US 2009159742, a double T-shaped intermediate part made of composite material is used.

The use of the double T-shaped intermediate parts described in this document may be problematic for certain configurations of lateral boxes and this invention is intended to resolve these problems.

### SUMMARY OF THE INVENTION

One objective of this invention is to provide a joining arrangement between two torsion boxes, such as the lateral boxes of a horizontal tail stabiliser of an aircraft, using a double T-shaped intermediate part that facilitates the assembly of the parts to implement said joint.

Another objective of this invention is to provide a method for manufacturing said intermediate part to give it an optimum configuration for its use as an intermediate joining part for said lateral boxes.

In a first aspect, these and other objectives are achieved with a method for manufacturing a double T-shaped part with a central section and upper and lower flanges used as an intermediate joining part for two box-shaped structural components, comprising upper and lower skins, said joint being made between the upper and lower skins of said components and the upper and lower flanges of said part, both said part and said boxes being made of composite material, which comprises the following steps:
a) Providing two C-shaped preforms, configured such that their central sections are parallel with one another and their upper and lower flanges are approximately parallel to the end zones of said skins.
b) Providing two flat preforms to reinforce the flanges.
c) Forming and curing the part made from said preforms using an RTM method.

In the preferred embodiments, said flat preforms are arranged in a central zone of the flanges of the double T-shaped intermediate part without covering its entire width with two or more segments stepped towards its longitudinal axis. This results in an effective method for manufacturing a double T-shaped intermediate part that facilitates the gradual transfer of loads between the boxes.

In other preferred embodiments, said flat preforms include local strengthening zones at one of their ends. This results in an effective method for manufacturing a double T-shaped intermediate part configured appropriately to receive local loads such as the loads generated by the trimming mechanisms of the horizontal tail stabiliser.

In other preferred embodiments, the intermediate joining parts are applied to boxes with or without dihedral and to multi-rib or multi-spar boxes. This results in an effective method for manufacturing a double T-shaped intermediate part configured appropriately for the basic types of lateral boxes of horizontal tail stabilisers of aircraft.

In a second aspect, the objectives mentioned are achieved by providing a joining arrangement for two box-shaped structural components comprising an upper skin, a lower skin, using a double T-shaped intermediate joining part and joining the skins of said components and the upper and lower flanges of said part using rivets, both said part and said components being made of composite material, in which said part is manufactured using the aforementioned method.

In a preferred embodiment, said joining arrangement uses at least two rows of rivets in each zone of different thickness of the upper and lower flanges of the part. This results in a joining arrangement that transfers loads between the boxes very efficiently.

Other features and advantages of this invention are set out in the following detailed description of an embodiment which illustrates the purpose of the invention in relation to the figures attached.

### DESCRIPTION OF THE FIGURES

Figure 1 shows a joining arrangement for two lateral boxes of a horizontal tail stabiliser of an aircraft with a T-shaped intermediate part known in the prior art.
Figure 2 shows a T-shaped intermediate part according to this invention and Figure 3 shows the preforms used in the method for manufacturing this intermediate part according to this invention.
Figure 4 shows a cross section of a joining arrangement for two lateral boxes with dihedral of a horizontal tail stabiliser of an aircraft with a T-shaped intermediate part according to this invention.
Figure 5 shows a cross section of a joining arrangement for two lateral boxes without dihedral of a horizontal tail stabiliser of an aircraft with a T-shaped intermediate part according to this invention.

### DETAILED DESCRIPTION OF THE INVENTION

The description below covers the embodiments of the invention for a joining arrangement for two lateral boxes 11, 11' of a horizontal tail stabiliser of an aircraft with a double T-shaped intermediate part. Both the lateral boxes 11, 11' and the intermediate part are made of a composite material of carbon fibre-reinforced plastic (CFRP).

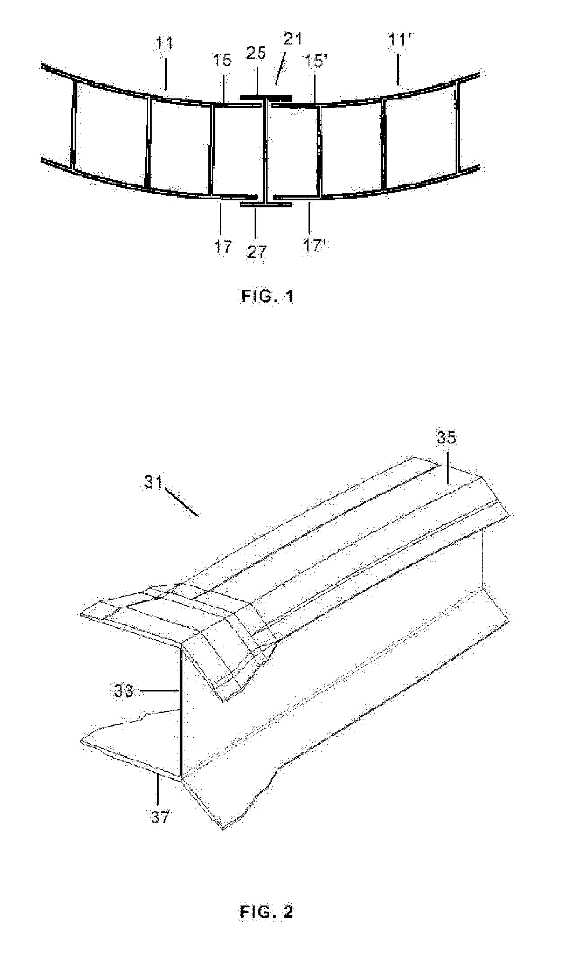

In the case of the joining arrangement described in US 2009159742, Figure 1 shows that it is based on the overlap of the flanges 25, 27 of the double T-shaped part 21 with the end zones of the skins 15, 17; 15', 17' of the lateral boxes 11, 11', to facilitate a riveted join between them. Furthermore, this joining arrangement enables the structure to be assembled by positioning the lateral boxes 11, 11' in their place and subsequently inserting the part 21 between them.

This joint arrangement requires the end zones of the skins 15, 17; 15', 17' to be flattened so that they can be attached to the flat flanges 25, 27 of the part.

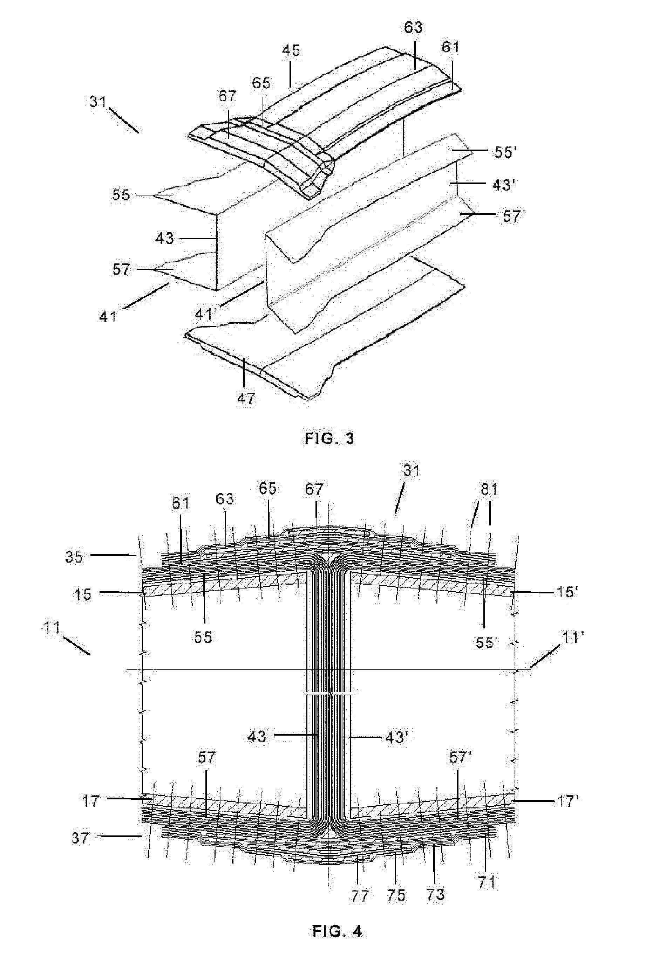

According to a preferred embodiment of this invention the joint arrangement for two lateral boxes 11, 11' of a tail stabiliser of an aircraft with a double T-shaped intermediate part 31, with a central section 33 and two flanges 35, 37 as shown in Figure 2, is based on the manufacture of the part using a resin transfer moulding (RTM) method, i.e. a closed moulding process, with resin injection using the preforms shown in Figure 3: two C-shaped preforms 41, 41', with central sections 43, 43' and flanges 55, 57; 55', 57' and two flat preforms 45, 47 (as is well known to the person skilled in the art the term "flat" should not be understood in a strictly geometric sense).

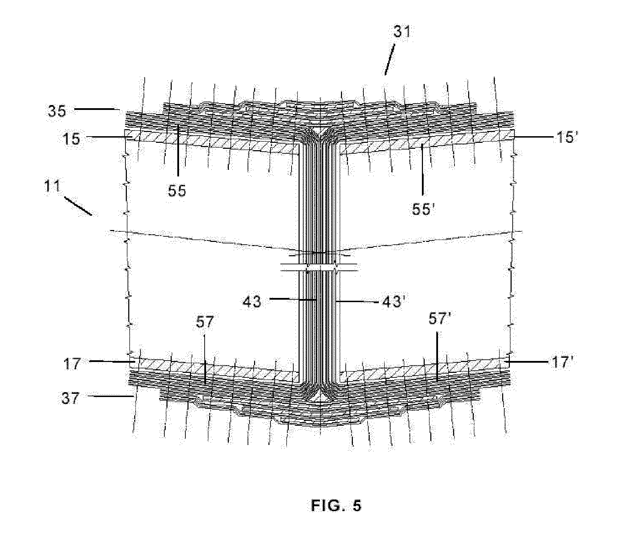

As shown in Figures 4 and 5, the intermediate part 31 manufactured according to said method, using appropriate moulds, for, respectively, several boxes 11, 11' with and without dihedral, has several flanges 35, 37 created by joining the flanges 55, 55'; 57, 57' of the C preforms with the flat preforms 45, 47 that are configured specifically, on one hand, to fit the particular configuration of the ends of the boxes 11, 11' and, on the other, to facilitate a gradual transfer of the load in the joint.

The aforementioned adaptability of the part 31 to the configuration of the ends of the boxes 11, 11' enables this invention to be applied to boxes with or without dihedral as well as to multi-rib or multi-spar boxes.

Moreover, and with particular reference to Figures 3 and 4, it can be seen that the preforms 45, 47 may be configured with segments of differing thickness both longitudinally and transversally.

Furthermore, Figure 3 shows that the upper preform 45 includes a base segment 61 on which there is a segment 63 that longitudinally covers the entire upper flange but that is narrower than the segment 61, on which, in turn, segments 65 and 67 are located on one of its ends. This configuration facilitates, on one hand, the gradual transfer of loads between the boxes 11, 11' thanks to the stepping of the segments 61, 63 and, on the other, provides local strengthening with the segments 65, 67 which may be necessary.

In Figure 4 the upper preform 45 includes a base segment 61 that does not cover the entirety of the upper flange of the part 31, which means that the first rows of rivets are applied to the joint of the skins 15, 15' and the zones coming from the 55, 55' of the C preforms-and it is covered by the stepped segments 63, 65 and 67 of decreasing width. This stepped configuration facilitates the gradual transfer of loads between the boxes 11, 11' through the part 31. Figure 4 shows a preferred embodiment with two rows of rivets 81 in each zone of differing thickness.

The advantages of this invention include the following:
- The number of parts used in joining the boxes 11, 11' is considerably reduced.
- The internal faces 55, 55'; 57, 57' of the intermediate part 31 in contact with the skins 15, 15', 17, 17' of the lateral boxes have, using a suitable tool, an optimum finish, which facilitates compliance with the tolerance requirements in manufacturing and assembly, that is effected by moving the intermediate part 31, once the lateral boxes 11, 11' are in their position, without any subsequent movement of the boxes 11, 11'.

Although this invention has been described in full in relation to the preferred embodiments, it is clear that any modifications within its scope can be included, this scope not being limited by the foregoing embodiments, but by the content of the claims below.

## Claims

1. Method for manufacturing a double T-shaped part (31) with a central section (33) and upper and lower flanges (35, 37) used as an intermediate joining part for two box-shaped structural components (11, 11'), comprising upper skins (15, 15') and lower skins (17, 17'), said joint being made between the upper and lower skins (15, 15'; 17, 17') of said components (11, 11') and the upper and lower flanges (35, 37) of said part (31), both said part (31) and said boxes (11, 11') being made of composite material, **characterised in that** it comprises the following steps:
a) providing two C-shaped preforms (41, 41'), configured such that their central sections (43, 43') are parallel with one another and their upper and lower flanges (55, 55'; 57, 57') are approximately parallel to the end zones of said skins (15, 15'; 17', 15');
b) providing two flat preforms (45, 47) to reinforce the flanges (35, 37);
c) forming and curing the part (31) made from said preforms (41, 41', 45, 47) using an RTM method.

2. Method for manufacturing a double T-shaped part (31) according to Claim 1, **characterised in that** said flat preforms (45, 47) are arranged in a central zone of the flanges (35, 37) of the part (31) without covering their entire width.

3. Method for manufacturing a double T-shaped part (31) according to Claim 2, **characterised in that** said flat preforms (45, 47) include at least two segments (61, 63; 71, 73) of differing thickness, the thicker segments (63, 73) being narrower than the thinner segments (61, 71).

4. Method for manufacturing a double T-shaped part (31) according to Claim 3, **characterised in that** said flat preforms (45, 47) include local strengthening zones at one of their ends.

5. Method for manufacturing a double T-shaped part (31) according to any one of Claims 1-4, **characterised in that** the end zones of the skins (15, 17; 15', 17') of said boxes (11, 11') are not parallel to one another.

6. Method for manufacturing a double T-shaped part (31) according to any one of Claims 1-4, **characterised in that** the end zones of the skins (15, 17; 15', 17') of said boxes (11, 11') are parallel to one another.

7. Method for manufacturing a double T-shaped part (31) according to Claim 6, **characterised in that** the end zones of the upper skins (15, 15') and the lower skins (17, 17') of said boxes (11, 11') are not aligned with one another.

8. Method for manufacturing a double T-shaped part (31) according to any one of Claims 1-7, **characterised in that** said boxes (11, 11') are multi-rib boxes.

9. Method for manufacturing a double T-shaped part (31) according to any one of Claims 1-7, **characterised in that** said boxes (11, 11') are multi-span boxes.

10. Method for manufacturing a double T-shaped part (31) according to any one of Claims 1-9, **characterised in that** said boxes (11, 11') are the lateral boxes of a horizontal tail stabiliser of an aircraft.

11. Joining arrangement for two box-shaped structural components (11, 11') comprising an upper skin (15, 15'), a lower skin (17, 17'), using a double T-shaped intermediate joining part (31) and effecting the joint between the skins (15, 15'; 17, 17') of said components (11, 11') and the upper and lower flanges (33, 35) of said part (31) using rivets, both said part (31) and said components (11, 11') being made of composite material, **characterised in that** said part (31) is manufactured according to the method of any one of Claims 1-10.

12. Joining arrangement according to Claim 11, **characterised in that** at least two rows of rivets (81) are used in each zone of differing thickness of the upper and lower flanges (33, 35) of the part (31).
